# EUROPEAN PATENT SPECIFICATION

(11) **EP 2 896 286 B1**
(45) Date of publication and mention of the grant of the patent: **14.12.2016**
(21) Application number: 14197716.5
(22) Date of filing: 12.12.2014
(51) Int. Cl.: A01G 1/00, A01C 21/00

(54) **Method for increasing the content of useful components in edible plants**
Verfahren zur Erhöhung des Gehalts nützlicher Inhaltsstoffe in essbaren Pflanzen
Procédé pour augmenter le teneur en ingrédients utiles dans des plantes comestibles

(30) Priority: 16.12.2013 IT BO20130688
(43) Date of publication of application: 22.07.2015
(73) Proprietor: Associazione Marsicana Produttori Patate Societa Cooperativa Agricola, 67043 Celano (AQ) (IT)
(72) Inventor: Poggi, Valeria, 40137 Bologna (BO) (IT); Bianchi, Battista, 67051 Avezzano (AQ) (IT); Stagnari, Fabio, 06059 Todi (PG) (IT); Pisante, Michele, 71016 San Severo (FG) (IT)
(74) Representative: Negrini, Elena

(56) References cited:
- EP-A2- 1 186 581
- US-A- 4 652 294
- Hartmut Kolbe ET AL: "Einflussfaktoren auf Ertrag und Inhaltsstoffe der Kartoffel", , 1 August 1997 (1997-08-01), pages 1-9, XP055131130, Leipzig Retrieved from the Internet: URL:http://www.landwirtschaft.sachsen.de/l andwirtschaft/download/kb9.pdf [retrieved on 2014-07-23]
- "Zinkdüngung in der Pflanzenproduktion", , 1 November 2005 (2005-11-01), pages 1-8, XP055130934, Jena Retrieved from the Internet: URL:http://www.tll.de/ainfo/pdf/zndu1105.p df [retrieved on 2014-07-22]
- "effizient düngen: Düngefibel", , 31 December 2012 (2012-12-31), pages 1-52, XP055131095, Dülmen Retrieved from the Internet: URL:http://www.agroplus.at/files/News/duen gefibel_web12.pdf [retrieved on 2014-07-23]

## Description

The present invention refers to the field concerning the agriculture and refers to a method for increasing the content of useful components in edible plants and in particular to increase the content of components useful for the good functioning of the human and animal organism typically in the edible portions of plants such as potatoes, vegetables, cereal and fruit cultivations, fodder and oleaginous plants, hydroponic cultures, etc.

There are known methods of spraying of iodine and selenium onto the epigeous portion of the plants able to increase the quantity of such elements in potatoes.

A drawback of such known methods consists in that the potatoes enriched by the realization of said known methods, while being of help to compensate deficiency of iodine or selenium consumption, are still deficient in components useful for the good functioning of the body, compared to their content of starch.

One object of the present invention is to propose a method for enriching the edible part of plants and in particular of potatoes and other vegetables with components, such as proteins, ascorbic acid, calcium, potassium, iron, zinc and magnesium, useful for the good functioning of the body.

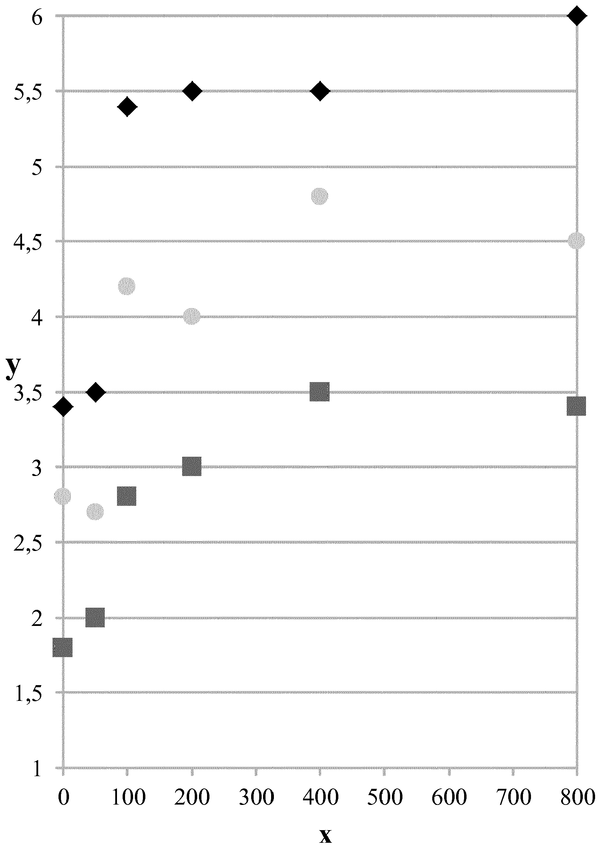

The characteristics of the invention are highlighted in the following with particular reference to the enclosed drawing table whose figure illustrates a view of a Cartesian graph where the X-axis represents the quantity of zinc applied per hectare (g(Zn)/ha) and the Y-axis represents, through circular disks, the zinc concentration (mg(Zn)/kg) and, through squares, the ascorbic acid concentration (g(AA)/kg) and, through small rhombs, the potassium concentration (g(K)/kg) in potato tubers to which plants was also applied magnesium in an amount of 250 grams per hectare.

The method for the increase of useful components in a plant at least partially edible, object of the present invention, provides the phase of applying to the plant an aqueous solution of zinc ions, the phase of applying to the plant an an aqueous solution of magnesium ions and possibly the optional phase of applying to the plant an an aqueous solution of iron ions.

The solutions are applied in one or more application cycles each comprising at least the spraying of the zinc aqueous solution onto the epigeous portion of the plants and the spraying of the magnesium aqueous solution onto the epigeous portion of the plants. Said applications must be carried out in different and disjointed periods of time.

Any optional phase of applying the iron aqueous solution is also carried out in different and disjointed periods of time from those of the other applications, and can be possibly present in one or in all the application cycles.

As will be better shown by the examples at the end of the description, the main and more consistent effect is provided by the zinc and magnesium applications, while the iron application provides a moderate improvement.

In fact, the zinc and magnesium applications according to the phases of the present method, surprisingly and unexpectedly increase the content in the plant, and in particular in its edible portions, of calcium, potassium, ascorbic acid and of proteins. It is namely surprising and unexpected that the phenomenon is not limited to the simple absorption by the plant and to the transfer to the edible portions of the element applied: the present method causes an increase also of components different from the supplied elements in the edible plant portions.

The method provides the application, onto the epigeous portion of the plants, of solutions of zinc, magnesium and possibly iron, separately, and in a different order depending on the type of plant, but without repeating the same treatment one after the other.

The method also provides, between an application and the subsequent, a lapse of time to allow the complete absorption of the elements contained in the solutions or at least to allow the complete drying of the portion of the sprayed plant; this time lapse can range from a few hours to a few days.

The method furthermore provides the repetition of the application onto the epigeous portion of the plants of the solutions of zinc, magnesium and possibly iron at least one time, at a lapse of time depending on the kind of plant (especially depending on the life cycle of the same plant) and on the pedoclimatic conditions. The time lapse between an applications cycle and the subsequent is about fifteen days for potatos and a time lapse ranging from five and twenty days in case of different kind of plants.

Because it has been observed that the efficiency of the absorption is maximal when the plants are in perfect conditions of turgidity, the method also provides the carrying out of an irrigation intervention from three to one day before the beginning of each application cycle if any rain is not occurred; for the same reason, especially in the summer, the method provides the carrying out of the application in the early morning, when the plants are not yet subject to water stress.

Moreover, the method provides to carry out each application after the drying of the dew on the plant, of the natural or irrigation rain, or of a previous application. Such phase of the method, besides prevents damage to the leaf of the plant has shown to improve the full absorption of the elements contained in the aqueous solutions.

It is provided to not carried out any other foliar treatment (for example, a antiparasitic treatment) on the plants in the three days before and three days after each application to avoid any inhibition of the absorption of the elements contained in the aqueous solutions.

The method provides to spray each aqueous solution in the form of small droplets of diameter less than one millimeter, preferably 0,05 millimeters, onto the epigeous portion of the plants, in particular on the leaves.

The solutions used are aqueous solutions of zinc, or magnesium or iron salts.

The zinc salts comprise: sulfate, selenite, acetate, chloride, perchlorate, nitrate, stearate, sulfide and oxide zinc. The magnesium salts comprise sulfate, acetate, carbonate, chloride, phosphate, nitrate, perchlorate, stearate magnesium. Iron salts are essentially sulfate, chloride, ammonium sulfate, sulfide, ammonium citrate, citrate, nitrate, perchlorate both ferrous and ferric.

The zinc solutions have a concentration of at least 0,2 per thousand in mass per volume (m/V) of the element and are applied to the plants in an amount of at least 100 g/ha of zinc. The magnesium solutions have a concentration of at least 0,4 per thousand (m/V) of the element and are applied to the plants in an amount of at least 200 g/ha of magnesium. The iron solutions have a concentration of at least 0,2 per thousand (m/V) of the element and are applied to the plants in an amount of at least 100 g/ha of iron.

To facilitate the zinc, magnesium and iron absorption, the aqueous solution can contain adjuvants that act on the cell membrane of plants such as organic solvents such as dimethylsulfoxide, glycols and polyglycols and their ethers, polyoxyethylene glycols, in the ratio ranging from 0,005% to 25% volume per volume (V/V) of the liquid phase. The aqueous solution can also contain adjuvants able to bind the ions of said elements and facilitate their penetration into the tissue of the plants.

Such adjuvants may include surfactants, biopolymers, chelating agents, amino acids, polyamino acids and polyamines. The surfactants are anionic surfactants, such as alkyl benzene sulfonate, or cationic surfactants, such as salts of alkyl ammonium, or of non-ionic surfactants, such as TRITON X-100 TM^{®} and TRITON X-20 TM^{®}, TWEEN TM^{®}, polyoxyethylene glycols, polyoxyiethylene ethers, alkyl aryl esters, ethoxylated alkyl phenols, in concentrations weight/volume ranging from 0.001% m/V to 0,30% m/V of the liquid phase. The biopolymers include, for example alginates, cellulose ethers, carboxymethylcellulose, carrageenins, agar, xanthans, lignin and derivatives of lignin, pectic acids, humic acids, fulvic acids in concentrations ranging from 0,001% m/V to 0.50% m/V. The chelating agents include, for example, EDTA (ethylenediamine tetracetic acid) and its salts, citric acid, oxalic acid, succinic acid, gluconic acid, tartaric acid in concentration per liter ranging from 0,05 milligrams to 50 grams per liter of solution. The amino acids can be used as pure or as hydrolysates of proteins or scleroproteins in concentrations ranging from 0,005 milligrams to 20 grams of amino acids per liter of solution. These components can also be present in any combination into the composition of the invention.

### EXAMPLE 1

The first example refers to the extensive cultivation of potato or onion to which have been foliarly applied, aqueous solutions of zinc sulfate and magnesium sulfate according to the method of the present invention. The aqueous solution of zinc sulfate contains 0,1 grams of zinc per liter and the aqueous solution of magnesium sulfate contains 0,25 grams of magnesium per liter and each of them has been sprayed on leaves in volumes of 500 liters of solution per hectare.

In the following, the above aqueous solutions of zinc sulphate and magnesium sulphate are sometimes respectively indicated as "first zinc solution" and as "first solution of magnesium". The first two solutions have been applied to cultivations in two cycles separated by a large time lapse; each of such cycles has involved, first, the application of one of the two said solutions, and afterwards, and after a time lapse, of the other solution. The two cycles have overall carried to each type of horticultural cultivation, 100 grams of zinc and 250 grams of magnesium per hectare.

The first cycle of application has been carried out onto the cultivation of potato at the phase of the beginning of the tuberization of and onto the onion at the phase of beginning of the bulb formation; the second cycle has been carried out after 15 days from the first cycle. Each cycle has been carried out according to the following sequence of phases: the early morning but after the dew drying has been applied the first zinc solution; after two hours, at dry leaf, has been applied the first magnesium solution. In the two days preceding the application and in the two days after the above said application, have not been carried out other leaf treatments. In the two days before the cycle application is carried out a watering so that the plants are in perfect condition at the time of the turgidity of the cycle. At harvest time, the treated potatoes had, compared to the untreated control, 30% more of protein and phosphorus, 50% more of ascorbic acid and iron, 60% more of calcium and potassium, 75% more of magnesium and 50% more of zinc; the treated onions have compared to the untreated control 25% more of protein and ascorbic acid, 30% more of calcium, iron, phosphorus and potassium, 100% more of magnesium and 250% more of zinc.

The following table refers to the average results of the experiments on the basis of the above example and carried out, according to the method of claims, in the potatoes cultivation.

| **Quantity of magnesium applied to the cultivation** | **Quantity of zinc applied to the cultivation** | **Zinc concentration in potato tubers** | **Potassium concentration in potato tubers** | **Concentration of ascorbic acid (AA) in potato tubers** |
|---|---|---|---|---|
| *g(Mg)*/*ha* | *g(Zn)*/*ha* | *mg(Zn)*/*kg* | *g(K)*/*kg* | *g(AA)*/*kg* |
| 0 | 0 | 2,8 | 3,4 | 1,8 |
| 250 | 50 | 2,7 | 3,5 | 2 |
| 250 | 100 | 4,2 | 5,4 | 2,8 |
| 250 | 200 | 4 | 5,5 | 3 |
| 250 | 400 | 4,8 | 5,5 | 3,5 |
| 250 | 800 | 4,5 | 6 | 3,4 |

The table shows the synergistic effect produced by the joint action of the magnesium and zinc by application of the latter approximately equal to or greater than 100 grams per hectare.
The amount of magnesium, with the exception of the control, was fixed at 250 g/ha because it is sufficient to the establishment of synergies with zinc in a clear way, while higher quantities have showed lower increases.

### EXAMPLE 2

Onto three ceral cultivations, wheat, barley and corn, have been foliarly applied into distinct and separate applications 200 grams of zinc, 500 grams of magnesium and 100 grams of iron per hectare. The zinc, magnesium and iron applications have being prepared respectively in the form of solutions of zinc selenite, magnesium nitrate and ferrous sulfate dissolved in pure water or in separate and distinct cultivation experiments, in water also containing EDTA in 5% m/V. Such solutions are also below indicated as second zinc solution and as second magnesium solution.

The above quantities have been distributed in three distinct and separate cycles for each cultivation test. The first cycle has been carried out at the phenologic stage of the ear formation and the two other after 20 and 40 days, respectively. Each cycle has been managed in this way: in the early morning has been applied the second solution of magnesium, after three hours, the second solution of zinc and the next day, in the early morning, that of ferrous sulfate.

Following all the provided cycles, it is obtained an increase of protein, zinc, magnesium, potassium and iron in both the straw and the grains. The solutions in pure water determine increases in the grain ranging from 50 and 75% compared to the control value and in the straw increments ranging from 75 and 150% compared to the control value. The solutions also containing EDTA determine increases in the grain ranging from 75 and 100% compared to the control and in the straw ranging from 90 and 200% compared to the control. The grain of wheat and barley is used for human consumption, while corn and straw are used to feed milk or beef cattles.

### EXAMPLE 3

Three fruit cultivation, apple tree, peach tree and vine tree, have been treated with aqueous solutions containing 0,1 grams of zinc per liter or 0,4 grams of magnesium per liter or 0,2 grams of iron per liter, respectively, in the form of zinc iodide, magnesium sulfate and ferric chloride, and containing or 0,5% (V/V) dimethyl sulfoxide (DMSO) or TWEEN^{®} 80 in 0,02% (m/V). Such third zinc and magnesium solutions have been sprayed onto leaves for three times, and the ferric chloride solution has been sprayed for two times during the fructification to allow the total application per hectare of 150 grams of zinc, 600 g of magnesium and 200 grams of iron.

Therefore, the above amounts have been distributed in three distinct and separate cycles for each cultivation test. The first cycle has been carried out at the phenologic stage of the fruit growth and the other two after one week and two weeks, respectively, after the end of the previous cycle. The first cycle has been so managed: in the early morning of the first day has been applied the ferric chloride solution, after three days has been applied the third zinc solution and after another three days the third magnesium solution. The second cycle was done one week after the application of the third magnesium solution and it has been made in the same way as the first one. The third cycle has been instead done in the following way: in the early morning of the first day has been applied the third zinc solution, and after three days the third magnesium solution. The fruits had, at the moment of harvest, concentrations of zinc, magnesium, calcium, potassium and ascorbic acid higher than the control. Apples, after the spraying with the solutions also containing DMSO, contain zinc, magnesium, calcium, potassium and ascorbic acid at higher concentrations than the control, of 50%, 25%, 200%, 150% and 50% respectively; very similar results are obtained using solutions that also contain TWEEN® 80. Peaches and grapes, after the spraying of the solutions also containing DMSO, contain zinc, magnesium, calcium, potassium and ascorbic acid concentrations higher than the control, 75%, 50%, 25%, 80% and 60% respectively; using the solutions containing Tween® 80 results approximately better of one time and a half are obtained. The method is used for both grapes assigned to the direct consumption and for grapes assigned to conversion into wine.

An advantage of the present invention is to provide a method for enriching the edible portion of plants and in particular of potatoes and other vegetables, with components useful for the good functioning of the body, such as proteins, ascorbic acid, calcium, potassium, iron, zinc and magnesium.

## Claims

1. Method for increasing the content of useful components in plants at least partially edible **characterized in** applying to the plant at least:
- an aqueous solution of zinc ions;
- an aqueous solution of magnesium ions;
where said solutions are applied in one or more application cycles each comprising at least the spraying of the zinc aqueous solution onto the epigeous portion of the plants and the spraying of the magnesium aqueous solution onto the epigeous portion of the plants, said applications being carried out in different and disjointed periods of time.

2. Method according to claim 1 **characterized in** carrying out each spraying onto the epigeous portion of the plants by means of atomization of the respective aqueous solution after the drying of the dew, of the natural rain, of the irrigation or of a preceding foliar fertilisation on the leaves of the plants.

3. Method according to claim 1 or 2 **characterized in** using different solutions for spraying onto the epigeous portion of the plants in subsequent applications within the same cycle.

4. Method according to any of the preceding claims **characterized in** repeating at least one time the first application cycle after about fifteen days from said first application cycle in the case of potatoes plant and after about a time period ranging from five to twenty days in the case of a different kind of plants.

5. Method according to any of the preceding claims **characterized in** using at least 100 g/ha of zinc and at least 200 g/ha of magnesium and/or a solution of zinc having a concentration of about 0,2 per mille of mass on volume and a magnesium solution having a concentration of about 0,4 per mille of mass on volume.

6. Method according to any of the preceding claims **characterized in** irrigating the plants two or three days before the beginning of each application cycle.

7. Method according to any of the preceding claims **characterized in** further applying onto the epigeous portion of the plant an aqueous solution of iron ions in each cycle.

8. Method according to claim 7 **characterized in** utilizing at least 100 g/ha of iron and/or a solution of iron having a concentration of at least 0,2 per mille of mass on volume.

9. Method according to any of the preceding claims **characterized in** carrying out, in the period of time ranging from three days before and three days after a spraying onto the epigeous portion of the plants of a application cycle exclusively applications consisting of spraying onto the epigeous portion of the plants of said cycle.

10. Method according to any of the preceding claims **characterized in** adding at least one adjuvant selected among organic solvents, surfactants, biopolymers, chelating agents, aminoacids, polyaminoacids and polyamines to at least one of the ionic solutions of at least a cycle.

## Patentansprüche

1. Verfahren zur Erhöhung des Gehalts nützlicher Komponenten in mindestens teilweise essbaren Pflanzen, **gekennzeichnet durch** ein Anwenden auf die Pflanze von mindestens:
- einer wässrigen Lösung mit Zink-Ionen;
- einer wässrigen Lösung mit Magnesium-Ionen;
wobei die Lösungen in einem oder mehreren Anwendungszyklen angewendet werden, wobei jeder dieser Anwendungszyklen mindestens das Sprühen der wässrigen Zink-Lösung auf den epigäischen Teil der Pflanzen sowie das Sprühen der wässrigen Magnesium-Lösung auf den epigäischen Teil der Pflanzen umfasst, während die Anwendungen in unterschiedlichen und nicht zusammenhängenden Zeiträumen ausgeführt werden.

2. Verfahren gemäß Anspruch 1, **gekennzeichnet durch** ein Ausführen jedes Sprühens auf den epigäischen Teil der Pflanzen mittels Zerstäubung der entsprechenden wässrigen Lösung nach dem Trocken von Tau, von natürlichem Regen, von Berieselung oder von vorangegangener Blattdüngung auf den Blättern der Pflanzen.

3. Verfahren gemäß Anspruch 1 oder 2, **gekennzeichnet durch** ein Verwenden unterschiedlicher Lösungen zum Sprühen auf den epigäischen Teil der Pflanzen in nachfolgenden Anwendungen innerhalb desselben Zyklus.

4. Verfahren gemäß einem der vorhergehenden Ansprüche, **gekennzeichnet durch** ein mindestens einmaliges Wiederholen des ersten Anwendungszyklus nach ungefähr fünfzehn Tagen nach dem ersten Anwendungszyklus im Fall von Kartoffelpflanzen, und nach ungefähr einem Zeitraum im Bereich von fünf bis zwanzig Tagen im Fall von einer anderen Pflanzenart.

5. Verfahren gemäß einem der vorhergehenden Ansprüche, **gekennzeichnet durch** ein Verwenden von mindestens 100 g/ha an Zink und mindestens 200 g/ha an Magnesium und/oder einer Zink-Lösung mit einer Massenkonzentration von ungefähr 0,2 Promille und einer Magnesium-Lösung mit einer Massenkonzentration von ungefähr 0,4 Promille.

6. Verfahren gemäß einem der vorhergehenden Ansprüche, **gekennzeichnet durch** ein Berieseln der Pflanzen zwei oder drei Tage vor dem Beginn jedes Anwendungszyklus.

7. Verfahren gemäß einem der vorhergehenden Ansprüche, **gekennzeichnet durch** ein zusätzliches Anwenden einer wässrigen Lösung mit Eisen-Ionen in jedem Zyklus auf den epigäischen Teil der Pflanze.

8. Verfahren gemäß Anspruch 7, **gekennzeichnet durch** ein Verwenden von mindestens 100 g/ha an Eisen und/oder einer Eisen-Lösung mit einer Massenkonzentration von ungefähr 0,2 Promille.

9. Verfahren gemäß einem der vorhergehenden Ansprüche, **gekennzeichnet durch** ein ausschließliches Ausführen von Anwendungen im Zeitraum im Bereich von drei Tagen vor und drei Tagen nach einem Sprühen auf den epigäischen Teil der Pflanzen eines Anwendungszyklus bestehend aus einem Sprühen auf den epigäischen Teil der Pflanzen des Zyklus.

10. Verfahren gemäß einem der vorhergehenden Ansprüche, **gekennzeichnet durch** ein Hinzugeben von mindestens einem Hilfsmittel, das ausgewählt ist aus organischen Lösungsmitteln, Tensiden, Biopolymeren, Chelatbildnern, Aminosäuren, Polyaminosäuren und Polyaminen, zu mindestens einer der ionischen Lösungen von mindestens einem Zyklus.

## Revendications

1. Procédé pour augmenter la teneur en composants utiles dans des plantes au moins partiellement comestibles, **caractérisé par le fait qu'**on applique à la plante au moins :
- une solution aqueuse d'ions zinc ;
- une solution aqueuse d'ions magnésium ;
où lesdites solutions sont appliquées en un ou plusieurs cycles d'application, chacun comprenant au moins la pulvérisation de la solution aqueuse de zinc sur la partie épigée des plantes et la pulvérisation de la solution aqueuse de magnésium sur la partie épigée des plantes, lesdites applications étant effectuées dans des périodes de temps différentes et séparées.

2. Procédé selon la revendication 1, **caractérisé par le fait que** l'on effectue chaque pulvérisation sur la partie épigée des plantes au moyen d'atomisation de la solution aqueuse respective après le séchage de la rosée, de la pluie naturelle, de l'irrigation ou d'une fertilisation foliaire précédente sur les feuilles des plantes.

3. Procédé selon l'une des revendications 1 ou 2, **caractérisé par le fait que** l'on utilise différentes solutions pour la pulvérisation sur la partie épigée des plantes en applications ultérieures à l'intérieur du même cycle.

4. Procédé selon l'une quelconque des revendications précédentes, **caractérisé par le fait que** l'on répète au moins une fois le premier cycle d'application après environ quinze jours à partir dudit premier cycle d'application dans le cas de plants de pommes de terre et après environ une période de temps se situant dans la plage allant de cinq à vingt jours dans le cas de différentes sortes de plantes.

5. Procédé selon l'une quelconque des revendications précédentes, **caractérisé par le fait que** l'on utilise au moins 100 g/ha de zinc et au moins 200 g/ha de magnésium et/ou une solution de zinc ayant une concentration d'environ 0,2 pour mille de masse sur volume et une solution de magnésium ayant une concentration d'environ 0,4 pour mille de masse sur volume.

6. Procédé selon l'une quelconque des revendications précédentes, **caractérisé par le fait que** l'on irrigue les plantes deux à trois jours avant le début de chaque cycle d'application.

7. Procédé selon l'une quelconque des revendications précédentes, **caractérisé par le fait que** l'on applique en outre sur la partie épigée de la plante une la solution aqueuse d'ions fer dans chaque cycle.

8. Procédé selon la revendication 7, **caractérisé par le fait que** l'on utilise au moins 100 g/ha de fer et/ou une solution de fer ayant une concentration d'au moins 0,2 pour mille de masse sur volume.

9. Procédé selon l'une quelconque des revendications précédentes, **caractérisé par le fait que** l'on effectue, dans la période de temps se situant dans la plage allant de trois jours avant à trois jours après une pulvérisation sur la partie épigée des plantes d'un cycle d'application, des applications exclusivement consistant en la pulvérisation sur la partie épigée des plantes dudit cycle.

10. Procédé selon l'une quelconque des revendications précédentes, **caractérisé par le fait que** l'on ajoute au moins un adjuvant choisi parmi des solvants organiques, des tensio-actifs, des biopolymères, des agents chélateurs, des acides aminés, des polyacides aminés et des polyamines à au moins l'une des solutions ioniques d'au moins un cycle.
